# EUROPÄISCHE PATENTANMELDUNG

(11) **EP 2 273 670 A1**
(43) Veröffentlichungstag der Anmeldung: **12.01.2011**
(21) Anmeldenummer: 09165163.8
(22) Anmeldetag: 10.07.2009
(51) Int. Cl.: H02P 25/22

(54) **Leistungsantriebssystem mit einer mehrere Wicklungssysteme enthaltende Drehfeldmaschine und zugehöriges Verfahren zum Betrieb bzw. zur Steigerung der Betriebsverfügbarkeit des Leistungsantriebssystem**

(71) Anmelder: Baumüller Nürnberg GmbH, 90482 Nürnberg (DE)
(72) Erfinder: Heidrich, Peter, 90480, Nürnberg (DE)
(74) Vertreter: Götz, Georg Alois

(57) **Zusammenfassung**

Leistungsantriebssystem (8) mit einem Mehrphasenmotor, insbesondere einem Drehstrommotor, und mit mehreren parallel geschalteten vollständigen Antriebsmodulen (9) und/oder Antriebsgrundmodulen (12) zum Antrieb des Mehrphasenmotors, wobei der Mehrphasenmotor, insbesondere der Drehstrommotor (14), einen Stator mit mehreren elektrisch voneinander unabhängigen mehrphasigen, insbesondere dreiphasigen, Wicklungen aufweist.

## Beschreibung

Die Erfindung betrifft ein Leistungsantriebssystem mit einem Mehrphasenmotor, insbesondere einem Drehstrommotor, und mit mehreren parallel geschalteten vollständigen Antriebsmodulen und/oder Antriebsgrundmodulen zum Antrieb der Mehrphasenmotors sowie ein Verfahren zum Betrieb und/oder zur Steigerung der Betriebsverfügbarkeit eines Leistungsantriebssystems mit einem Mehrphasenmotor, insbesondere mit einem Drehstrommotor, und mit mehreren parallel geschalteten vollständigen Antriebsmodulen und/oder Antriebsgrundmodulen zum Antrieb des Mehrphasenmotors.

Aus dem Stand der Technik sind Leistungsantriebssysteme mit vollständigen Antriebsmodulen (CDMs, complete drive modules) bzw. Antriebsgrundmodulen (BDMs, basic drive modules) zum Antrieb von Motoren bekannt. Der Ausfall eines vollständigen Antriebsmoduls bzw. eines Antriebsgrundmoduls wird beispielsweise bei einer Anordnung, bei der jeweils nur eines dieser Module vorgesehen ist, dazu führen, dass der Antrieb insgesamt nicht mehr zur Verfügung steht. Aus dem Stand der Technik ist es bereits bekannt, vollständige Antriebsmodule bzw. Antriebsgrundmodule in einer solchen Art und Weise parallel zu schalten, dass sie gemeinsam auf einen Standardmotor wirken, der beispielsweise eine dreiphasige Drehstromwicklung aufweist. Tritt bei einer solchen Anordnung ein Fehler in einer Motorwicklung auf, so führt dies allerdings zum Verlust des gesamten Leistungsantriebssystems (PDS, power drive system). Die Maschinenverfügbarkeit kann somit nicht im erforderlichen Umfang garantiert werden. Im Fehlerfall fällt das Leistungsantriebssystem komplett aus, woraus gravierende Probleme und beträchtliche wirtschaftliche Schäden resultieren können.

Der Erfindung liegt damit die Aufgabe zugrunde, ein Leistungsantriebssystem der eingangs genannten Art anzugeben, das diesbezüglich verbessert ist.

Zur Lösung dieser Aufgabe ist erfindungsgemäß ein Leistungsantriebssystem mit einem Mehrphasenmotor, insbesondere mit einem Drehstrommotor, und mit mehreren parallel geschalteten vollständigen Antriebsmodulen und/oder Antriebsgrundmodulen zum Antrieb des Mehrphasenmotors vorgesehen, das sich dadurch auszeichnet, dass der Mehrphasenmotor, insbesondere der Drehstrommotor, einen Stator mit mehreren elektrisch voneinander unabhängigen mehrphasigen, insbesondere dreiphasigen, Wicklungen aufweist.

Das Leistungsantriebssystem weist somit einen mehrphasigen Motor auf, bei dem es sich insbesondere um einen Drehstrommotor handeln kann, dessen Stator erfindungsgemäß nicht nur eine einzige mehrphasige, also insbesondere dreiphasige, Wicklung hat, sondern im Unterschied zum Stand der Technik mehrere, im elektrischen Sinne voneinander unabhängige dreiphasige Wicklungen aufweist. Durch eine solche Ausführung des Leistungsantriebssystem lässt sich die Verfügbarkeit des gesamten Antriebssystems steigern, da weder der einzelne Ausfall einer Motorwicklung noch der Ausfall eines der parallel zueinander geschalteten vollständigen Antriebsmodule bzw. Antriebsgrundmodule zum Verlust des gesamten Antriebs führt. Fällt beispielsweise ein komplettes Antriebsmodul aus, so existiert noch ein parallel dazu geschaltetes weiteres komplettes Antriebsmodul, das vorteilhafterweise mit einem anderen der mehreren mehrphasigen Wicklungssysteme des Stators des Motors verbunden ist, so dass das Leistungsantriebssystem trotz des Fehlers mit reduzierter Leistung weiter betrieben werden kann. Entsprechend ist bei einem Fehler in einem Wicklungssystem ein Weiterbetrieb auf Basis der anderen mehrphasigen Wicklungen möglich. Das Leistungsantriebssystem der Erfindung kann daher deutlich ausfallsicherer betrieben werden als herkömmliche Systeme.

Das Leistungsantriebssystem kann nicht nur zwei zueinander parallel geschaltete vollständige Antriebsmodule mit entsprechenden Antriebsgrundmodulen aufweisen, sondern es kann selbstverständlich auch eine Anordnung vorgesehen sein, bei der drei oder sogar mehr als drei vollständige Antriebsmodule parallel zueinander geschaltet sind und jeweils Ausgänge aufweisen, die mit einer anderen der mehreren mehrphasigen Wicklungen des Drehstrommotors oder Mehrphasenmotors verbunden sind. Die parallel geschalteten vollständigen Antriebsmodule weisen in der Regel jeweils ein Antriebsgrundmodul als Bestandteil auf.

Im Hinblick auf die Kosten entstehen bei der Erfindung im Vergleich zu bereits existierenden Leistungsantriebssystemen, bei denen die Leistung so groß ist, dass mindestens zwei vollständige Antriebsmodule bzw. mindestens zwei Antriebsgrundmodule zum Erreichen der benötigten Antriebsleistung erforderlich sind, keinerlei Nachteile. Bereits bei den herkömmlichen Leistungsantriebssystemen mit nur einer mehrphasigen Wicklung kann die Leistung an den Motor nur dann übertragen werden, wenn mehrere Motorkabel oder Motorleitungen je Phase gelegt werden. Entsprechende Anschlussstellen für die Motorkabel existierten somit bereits.

Durch die erfindungsgemäß vorgesehenen mehreren, im elektrischen Sinn voneinander unabhängigen mehrphasigen Wicklungen entsteht somit nur ein Vorteil, nämlich die zuverlässige Sicherung der Verfügbarkeit des Antriebssystems, wenn auch im Fehlerfall gegebenenfalls mit verringerter Leistung. Entscheidend für diesen Vorteil ist die Ausführung des Motors mit mehr als einer mehrphasigen Drehstromwicklung in einem einzigen gemeinsamen Stator, wobei die mehreren Wicklungssysteme unabhängig sind.

Der Mehrphasenmotor kann ein vier- oder höherpoliger, insbesondere zehnpoliger oder zwanzigpoliger oder vierzigpoliger, Mehrphasenmotor sein. Der Ausgang jedes vollständigen Antriebsmoduls und/oder jedes Antriebsgrundmoduls kann mit einer anderen unabhängigen mehrphasigen Wicklung des Stators verbunden sein.

Hochpolige Motoren, wie sie die Erfindung umfasst, sind beispielsweise High-Torque-Motoren bzw. drehmomentstarke Direktantriebsmotoren. Zu nennen sind beispielsweise die DST-Motoren des Herstellers Baumüller. Diese drehmomentstarken Torque-Motoren weisen in der Regel mindestens zehn, eher zwanzig und vierzig bzw. noch mehr Pole auf. Besonders mit solchen Motoren empfiehlt sich die Verwendung des erfindungsgemäßen Leistungsantriebssystems mit mehreren voneinander unabhängigen beispielsweise dreiphasigen Wicklungssystemen.

Zur Herstellung der Ausfallsicherheit kann insbesondere eine Anordnung derart verwendet werden, dass jedes vollständige Antriebsmodul bzw. das Antriebsgrundmodul am Ausgang eines vollständigen Antriebsmoduls auf einer andere der mehrphasigen, elektrisch voneinander unabhängigen Wicklungen des Stators wirkt. Fällt in einem solchen Fall beispielsweise ein vollständiges Antriebsmodul aus, so wirken das oder die anderen auf weitere unabhängige mehrphasige Wicklungen des Stators, so dass das System mit entsprechend verringerter Leistung weiterhin betrieben werden kann. Es kommt nicht zu einem Maschinenausfall. Gleiches gilt für den Fall, dass an einer der mehreren unabhängigen mehrphasigen Wicklungen ein Fehler auftritt. In diesem Fall funktionieren die eine oder die mehreren anderen unabhängigen Wicklungen weiterhin wie gewohnt und es wird eine Antriebsleistung erbracht, die den Anlagenbetrieb zumindest grundsätzlich gewährleistet.

Dementsprechend kann das Leistungsantriebssystem bei Ausfall einer oder mehrerer, aber nicht aller, der elektrisch voneinander unabhängigen mehrphasigen Wicklungen und/oder bei Ausfall eines oder mehrerer, aber nicht aller, vollständigen Antriebsmodule und/oder Antriebsgrundmodule zum (Weiter-) Betrieb mit reduzierter Leistung ausgebildet sein. Somit ist es erfindungsgemäß möglich, ohne Mehrkosten die Verfügbarkeit des Antriebssystems deutlich zu steigern. Dies ist insbesondere dann von Vorteil, wenn ein Totalausfall eines Antriebs für eine Applikation sehr kritisch bzw. mit sehr großem wirtschaftlichen Schaden verbunden wäre. Ein Totalausfall wird erfindungsgemäß durch die mehreren, im elektrischen Sinn voneinander unabhängigen Wicklungssysteme des Stators in Kombination mit den parallelen Antriebsmodulen verhindert.

Die vollständigen Antriebsmodule und/oder Antriebsgrundmodule können, wenigstens teilweise, zur regelungstechnischen Berücksichtigung eines durch die Bauart des Mehrphasenmotors bedingten Phasenversatzes bei den mehrphasigen Wicklungen ausgebildet sein.

Die vollständigen Antriebsmodule bzw. Antriebsgrundmodule (bzw. zumindest ein Teil dieser Module) sind mit besonderem Vorteil in der Lage, den durch die Bauart des Motors entstehenden Phasenversatz der Drehstromwicklungen im Rahmen einer Regelung zu berücksichtigen, um diesen beispielsweise je nach Anforderung vollständig bzw. teilweise auszugleichen. Der elektrische Phasenversatz, den die einzelnen Drehstromwicklungen untereinander aufweisen, ist somit für den Betrieb unerheblich, da diesem im Rahmen der Regelung mit entsprechenden Sollvorgaben, auf die die Istwerte eingeregelt werden, ohne Weiteres begegnet werden kann.

Weiterhin können die vollständigen Antriebsmodule und/oder Antriebsgrundmodule zum Aufbau eines resultierenden Mehrphasenstromfeldes ausgebildet sein, das die Summe der einzelnen Mehrphasenstromfelder ist. Das Drehstromfeld oder ein anderes Mehrphasenfeld wird also beispielsweise so aufgebaut, dass das Gesamtdrehfeld die Summe aller einzelnen Drehstromfelder bildet.

Das erfindungsgemäße Leistungsantriebssystem kann zum Antrieb einer Extruders, insbesondere einer Extruderschnecke, und/oder allgemein einer Kunststoffmaschine und/oder einer Lüftung bzw. eines Gebläses, insbesondere für einen Hochofen, ausgebildet sein. Aufgrund der erfindungsgemäßen deutlichen Verbesserung der Verfügbarkeit des Antriebs bietet sich die Verwendung eines erfindungsgemäßen Leistungsantriebssystems insbesondere dann an, wenn ein Totalausfall eines Antriebs für eine Applikation sehr kritisch und mit großem wirtschaftlichen Schaden verbunden wäre. Dies gilt unter anderem für Extruderschnecken, die im Fall eines Fehlers komplett geleert werden müssen, da bei der Erkaltung des plastifizierten Kunststoffs die gesamte Schnecke aufwändig zu tauschen wäre. Weiterhin bietet sich die Verwendung eines erfindungsgemäßen Leistungsantriebssystems zum Antrieb von Gebläsen für Hochöfen an, bei denen das Material im Hochofen nicht erkalten darf. Die Leistungsantriebssysteme sind für diese Anwendungen entsprechend mit geeigneten Antriebsmodulen und Motoren auszubilden.

Das Leistungsantriebssystem kann neben dem Mehrphasenmotor wenigstens einen Messfühler zur Aufnahme von Motordaten aufweisen und/oder wenigstens ein vollständiges Antriebsmodul kann im Rahmen einer Systemregelung und Systemablaufsteuerung neben dem Antriebsgrundmodul eine Stromrichterbaugruppe und/oder eine Steuer- und Regeleinrichtung aufweisen und/oder wenigstens ein vollständiges Antriebsmodul kann eine Speisebaugruppe und/oder Hilfsausrüstungen und/oder weitere Ausrüstungen aufweisen und/oder das Leistungsantriebssystem kann zum Antrieb von Ausrüstung einer Anlage oder eines Teils einer Anlage ausgebildet sein.

Eine Anlage bzw. ein Teil einer Anlage, beispielsweise eine Extruderanlage oder ein Hochofen, weisen angetriebene Ausrüstung wie eine Extruderschnecke oder ein Gebläse für einen Hochofen auf. Zum Antrieb dieser Ausrüstung ist ein Leistungsantriebssystem gemäß der Erfindung vorgesehen, das mehrere parallel geschaltete vollständige Antriebsmodule enthält, beispielsweise zwei oder drei solcher Module, und auf einen Stator mit unabhängigen Mehrphasenwicklungen wirkt.

Die vollständigen Antriebsmodule umfassen Antriebsgrundmodule und des Weiteren Stromrichterbaugruppen und Steuer- bzw. Regeleinrichtungen, um die Systemregelung und -ablaufsteuerung zu gewährleisten. Des Weiteren sind in der Regel Speisebaugruppen, Hilfsausrüstungen und andere Ausrüstungen vorhanden. Ein weiterer Teil des Leistungsantriebssystems ist der Motor, erfindungsgemäß ein Mehrphasenmotor, an dem, beispielsweise für Regelungszwecke, Messfühler zur Aufnahme von Daten, die den Betrieb kennzeichnen, vorgesehen sind.

Vorteilhafterweise kann das erfindungsgemäße Leistungsantriebssystem ohne Symmetrierdrosseln am Ausgang des einen oder der mehreren Antriebsgrundmodule realisiert sein und/oder es kann wenigstens ein vollständiges Antriebsmodul wenigstens einen Netzfilter und/oder eine Kommutierungsdrossel und/oder ein Antriebsgrundmodul aufweisen, insbesondere diese drei Bauteile in dieser Reihenfolge dem Mehrphasenmotor vorgeschaltet.

Beim erfindungsgemäßen Leistungsantriebssystem mit den mehreren unabhängigen Wicklungssystemen kann auf die im Stand der Technik bei der Parallelschaltung der vollständigen Antriebsmodule bzw. der Antriebsgrundmodule vorgesehenen Symmetrierdrosseln verzichtet werden, so dass weniger Bauraum im Schaltschrank benötigt wird bzw. vorgesehen sein muss. Erfindungsgemäß kann auf diese Weise der Wirkungsgrad gesteigert werden, so dass infolge der Verbesserung des Wirkungsgrads weniger Wärme aus dem Schaltschrank abgeführt werden muss. Die vollständigen Antriebsmodule bestehen bei der Erfindung somit in aller Regel aus einem Netzfilter, an den sich eine Kommutierungsdrossel anschließt, gefolgt von einem Antriebsgrundmodul. Der Ausgang des Antriebsgrundmoduls führt direkt zum anzutreibenden Mehrphasenmotor. Das gilt im Fall von mehreren vollständigen Antriebsmodulen ebenso für die anderen, parallel geschalteten vollständigen Antriebsmodule, wobei die Ausgänge der Antriebsgrundmodule der vollständigen Antriebsmodule jeweils direkt dem Mehrphasenmotor zugeleitet werden. Eine Verknüpfung der Ausgänge der Antriebsgrundmodule bzw. eine gemeinsame Zuleitung zum Motor ist nicht mehr erforderlich, da dieser mehrere Wicklungssysteme aufweist. Somit ist erfindungsgemäß die Ausfallsicherheit erhöht und ein Betrieb mit reduzierter Leistung auch noch möglich, wenn es in einem vollständigen Antriebsmodul zu Fehlern kommt bzw. wenn eine der mehrphasigen Motorwicklungen schadhaft ist.

Das Leistungsantriebssystem kann zwei oder drei parallel geschaltete vollständige Antriebsmodule aufweisen und/oder der Stator des Mehrphasenmotors kann zwei oder drei elektrisch voneinander unabhängige mehrphasige Wicklungen aufweisen und/oder jede elektrisch unabhängige mehrphasige Wicklung kann mit einem anderen vollständigen Antriebsmodul in Verbindung stehen. Vorteilhafterweise weist das Leistungsantriebssystem zwei oder drei parallel geschaltete vollständige Antriebsmodule auf, insbesondere jeweils mit einem Netzfilter, einer Kommutierungsdrossel und einem Antriebsgrundmodul, auf.

Selbstverständlich ist es aber auch möglich, dass mehr als drei vollständige Antriebsmodule vorgesehen sind. Vorteilhafterweise weist der Motor bei zwei parallel geschalteten vollständigen Antriebsmodulen zwei elektrisch voneinander unabhängige mehrphasige Wicklungen, beispielsweise zwei dreiphasige Wicklungen, auf. Dies wäre der Fall einer 2×3-phasigen Wicklung. Entsprechend können bei drei parallel geschalteten vollständigen Antriebsmodulen drei unabhängige mehrphasige Wicklungen am gemeinsamen Stator angeordnet sein (3×3-phasige Wicklung). Dementsprechend ist die Anordnung so, dass jede der elektrisch unabhängigen mehrphasigen Wicklungen mit einem anderen vollständigen Antriebsmodul bzw. mit dem Ausgang eines anderen Antriebsgrundmoduls in Verbindung steht. Dies ermöglicht bei Fehlern in einzelnen Wicklungen bzw. in Teilen der vollständigen Antriebsmodule einen Weiterbetrieb der Maschine mit reduzierter Leistung, so dass ein Totalausfall sehr zuverlässig verhindert werden kann. Denkbar ist aber auch eine Anordnung, bei der einige (beispielsweise zwei) parallel geschaltete Antriebsmodule auf eine einzige mehrphasige Wicklung wirken, während für ein anderes oder weitere parallel geschaltete Antriebsmodule eine oder mehrere weitere, von der ersten Wicklung elektrisch unabhängige Mehrphasenwicklungen vorgesehen sind.

Des Weiteren betrifft die Erfindung ein Verfahren zum Betrieb und/oder zur Steigerung der Betriebsverfügbarkeit eines Leistungsantriebssystems mit einem Mehrphasenmotor, insbesondere mit einem Drehstrommotor, und mit mehreren parallel geschalteten vollständigen Antriebsmodulen und/oder Antriebsgrundmodulen zum Antrieb des Mehrphasenmotors, insbesondere ein Verfahren zur Steigerung der Betriebsverfügbarkeit eines Leistungsantriebssystems wie im Vorstehenden geschildert, das sich dadurch auszeichnet, dass der Mehrphasenmotor, insbesondere der Drehstrommotor, mit einem Stator mit mehreren elektrisch voneinander unabhängigen mehrphasigen, insbesondere dreiphasigen, Wicklungen betrieben wird.

Beim erfindungsgemäßen Verfahren wird demgemäß die Verfügbarkeit des Leistungsantriebssystems dadurch gesteigert bzw. dieses derart betrieben, dass der Stator beispielsweise des Drehstrommotors ein Stator mit mehreren im elektrischen Sinn voneinander unabhängigen und mehrphasigen Wicklungen ist, deren voneinander unabhängiger Betrieb eine weitgehende Ausfallsicherheit gewährleistet. Beim Betriebsverfahren gemäß der Erfindung ist also beim Ausfall eines Antriebsmoduls bzw. bei einem Fehler im Wicklungssystem in aller Regel ein Weiterbetrieb des Antriebssystems möglich, wenn auch mit entsprechend verringerter Leistung. Dies bietet besonders bei kritischen Applikationen Vorteile, bei denen ein vollständiger Ausfall in jedem verhindert werden muss.

Das Leistungsantriebssystem gemäß der Erfindung kann also bei Ausfall einer oder mehrerer, aber nicht aller, der elektrisch voneinander unabhängigen mehrphasigen Wicklungen und/oder bei Ausfall eines oder mehrerer, aber nicht aller, vollständigen Antriebsmodule und/oder Antriebsgrundmodule mit reduzierter Leistung betrieben werden und/oder die vollständigen Antriebsmodule und/oder Antriebsgrundmodule können, wenigstens teilweise, einen durch die Bauart des Mehrphasenmotors bedingten Phasenversatz bei den mehrphasigen Wicklungen regelungstechnisch berücksichtigen bzw. ausgleichen.

Erfindungsgemäß wird die Maschinenverfügbarkeit von Leistungsantriebssystemen durch Parallelschaltung vollständiger Antriebssysteme oder von Antriebsgrundmodulen und Motoren mit einem Stator gesteigert, der mehrere, im elektrischen Sinne voneinander unabhängige dreiphasige Wicklungen aufweist. Statt eines Ausfalls des Gesamtsystems, wie er bei bisherigen Betriebsverfahren unvermeidlich ist, sobald ein Fehler im Antriebsmodul bzw. im einzigen Wicklungssystem des Stators auftritt, ist erfindungsgemäß ein Weiterbetrieb möglich. Durch die Regelung des Antriebssystems lassen sich Phasenverschiebungen der Drehstromwicklungen untereinander wieder ausgleichen.

Die vollständigen Antriebsmodule und/oder die Antriebsgrundmodule können ein resultierendes Mehrphasenstromfeld aus der Summe der einzelnen Mehrphasenstromfelder aufbauen und/oder das Leistungsantriebssystem kann Kunststoffmaschinen, Extruder, Plastifizier- bzw. Extruderschnecken und/oder Lüftungen bzw. Gebläse, beispielsweise eines Hochofens, antreiben.

Des Weiteren kann im Rahmen des erfindungsgemäßen Verfahrens ein Leistungsantriebssystem betrieben werden, das neben dem Mehrphasenmotor wenigstens einen Messfühler zur Aufnahme von Motordaten aufweist und/oder das wenigstens ein vollständiges Antriebsmodul umfasst, das im Rahmen einer Systemregelung und Systemablaufsteuerung neben dem Antriebsgrundmodul eine Stromrichterbaugruppe und/oder eine Steuer- und Regeleinrichtung aufweist, und/oder das wenigstens ein vollständiges Antriebsmodul umfasst, das eine Speisebaugruppe und/oder Hilfsausrüstungen und/oder weitere Ausrüstungen aufweist, und/oder das Leistungsantriebssystem kann Ausrüstung einer Anlage oder eines Teils einer Anlage antreiben.

Besonders vorteilhaft beim erfindungsgemäßen Verfahren ist, dass das Leistungsantriebssystem ohne Symmetrierdrosseln am Ausgang des oder der Antriebsgrundmodule betrieben werden kann und/oder dass wenigstens ein vollständiges Antriebsmodul des Leistungsantriebssystems mit wenigstens einem Netzfilter und/oder einer Kommutierungsdrossel und/oder einem Antriebsgrundmodul betrieben wird, insbesondere mit diesen drei Bauteilen in dieser Reihenfolge dem Mehrphasenmotor vorgeschaltet.

Der Netzfilter, die Kommutierungsdrossel und das Antriebsgrundmodul bilden somit ein vollständiges Antriebsmodul für das erfindungsgemäße Betriebsverfahren bzw. Verfahren zur Steigerung der Maschinenverfügbarkeit, wobei vom Antriebsgrundmodul im Falle eines Drehstromsystems drei Ausgänge direkt in die Drehstrommaschine führen. Sind nun beispielsweise drei vollständige Antriebsmodule parallel geschaltet, so geht von jedem der drei Antriebsgrundmodule der drei vollständigen Antriebsmodule eine solche dreiphasige Verbindung zum Drehstrommotor aus, der entsprechend drei im elektrischen Sinne voneinander unabhängige dreiphasige Wicklungen aufweist.

Im Rahmen des Leistungsantriebssystems können also zwei oder drei vollständige Antriebsmodule parallel geschaltet werden und/oder der Stator des Mehrphasenstrommotors kann mit zwei oder drei elektrisch voneinander unabhängigen mehrphasigen Wicklungen betrieben werden und/oder jede elektrisch unabhängige mehrphasige Wicklung kann mit einem anderen vollständigen Antriebsmodul verbunden werden.

Auf diese Art und Weise kann eine optimale Ausfallsicherheit gewährleistet werden, die insbesondere bei kritischen Applikationen bzw. bei Anwendungen, bei denen ein vollständiger Ausfall einen hohen Schaden hervorrufen würde, sinnvoll ist.

Weitere Vorteile, Merkmale und Einzelheiten der Erfindung ergeben sich anhand der folgenden Ausführungsbeispiele sowie aus den Zeichnungen. Dabei zeigen:
- Fig. 1: eine Übersicht über die Bestandteile eines Leistungsantriebssystems gemäß der Erfindung im Rahmen einer Anlage,
- Fig. 2: ein Leistungsantriebssystem gemäß dem Stand der Technik,
- Fig. 3: ein erfindungsgemäßes Leistungsantriebssystem mit zwei dreiphasigen Wicklungen und
- Fig.4: ein erfindungsgemäßes Leistungsantriebssystem mit drei dreiphasigen Wicklungen.

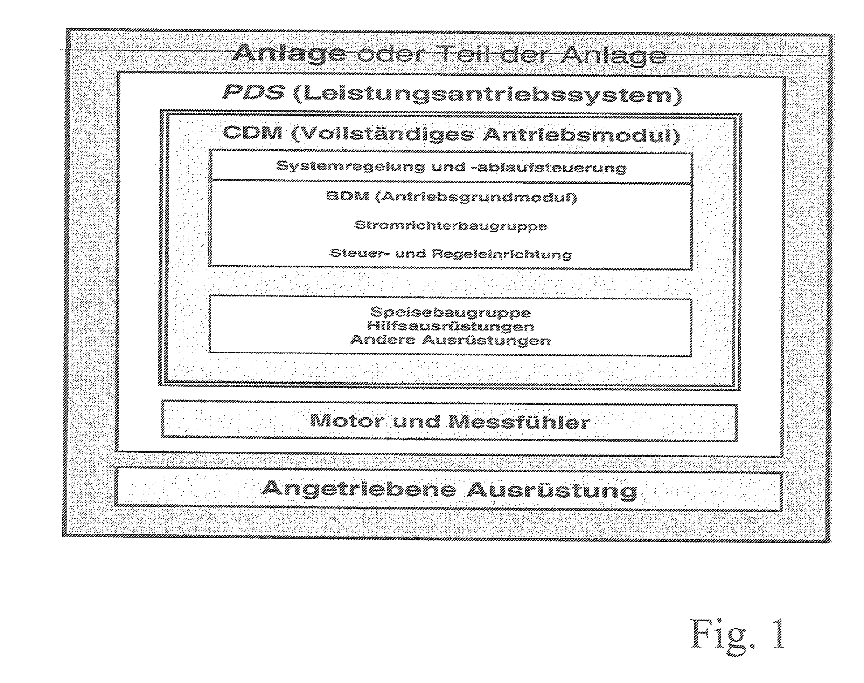

In der Fig. 1 ist eine Übersicht über die Bestandteile eines erfindungsgemäßen Leistungsantriebssystems im Rahmen einer Anlage gezeigt.

Die Anlage oder der Anlagenteil weist anzutreibende Bestandteile bzw. angetriebene Ausrüstung auf, deren Antrieb über ein Leistungsantriebssystem, ein PDS, erfolgt. Das Leistungsantriebssystem weist hierzu vollständige Antriebsmodule auf, von denen erfindungsgemäß mehrere parallel zueinander geschaltet sind und die im Rahmen der Systemregelung und - ablaufsteuerung Antriebsgrundmodule (BDMs), Stromrichterbaugruppen und Steuer- und Regeleinrichtungen aufweisen. Des Weiteren können Speisebaugruppen, Hilfsausrüstungen und weitere Ausrüstungen für den Betrieb des Antriebssystems vorgesehen sein.

Darüber hinaus umfasst das Leistungsantriebssystem den anzutreibenden Motor, bei dem es sich im Rahmen der Erfindung um einen Mehrphasenmotor, insbesondere um einen Drehstrommotor, handelt. Dem Motor sind zur Aufnahme von Daten, die beispielsweise für die Steuerung und Regelung verwendet werden, zweckmäßigerweise Messfühler zugeordnet. Das Leistungsantriebssystem ermöglicht den Antrieb bestimmter Systemkomponenten, wobei insbesondere bei kritischen Applikationen ein solches Leistungsantriebssystem möglichst ausfallsicher gestaltet werden sollte, wozu die vorliegende Erfindung mit dem Konzept mehrerer unabhängiger Wicklungen auf einem gemeinsamen Stator einen Beitrag liefert.

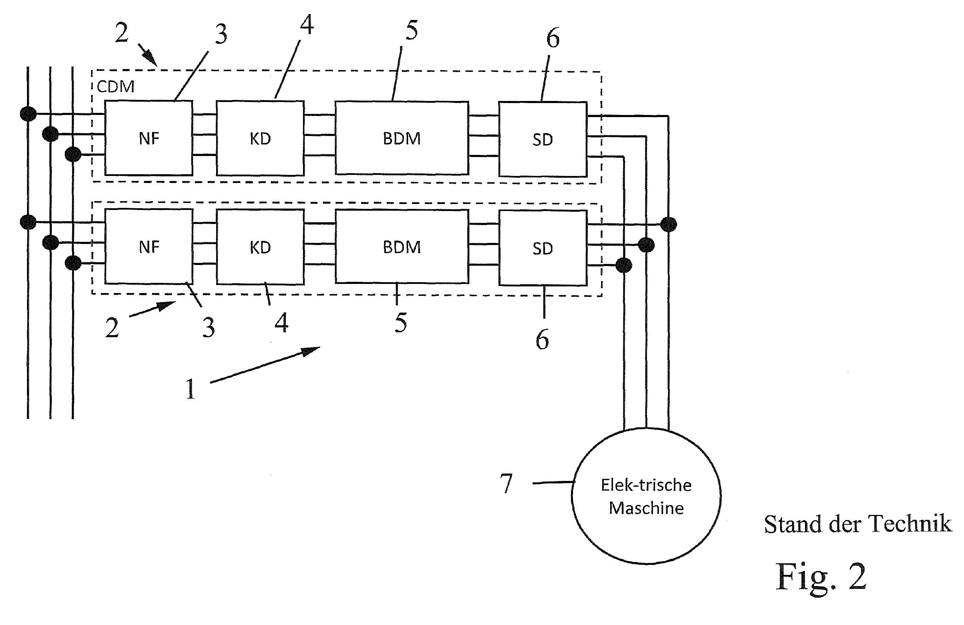

In der Fig. 2 ist ein Leistungsantriebssystem 1 gemäß dem Stand der Technik gezeigt, das zwei parallel zueinander geschaltete vollständige Antriebsmodule 2 aufweist, in denen jeweils ein Netzfilter 3, eine Kommutierungsdrossel 4, ein Antriebsgrundmodul 5 und eine Symmetrierungsdrossel 6 hintereinander geschaltet sind.

Von den jeweils drei Ausgängen der zwei vollständigen Antriebsmodule 2 bzw. der Symmetrierungsdrosseln 6 der vollständigen Antriebsmodule 2 gehen Leitungen aus, die entsprechend der Phase noch vor der elektrischen Maschine 7, die es anzutreiben gilt, zusammenlaufen. Die elektrische Maschine 7 weist daher nur drei Eingänge auf, über die die einzige dreiphasige Wicklung der elektrischen Maschine 7 versorgt wird.

Kommt es nun zu einem Fehler im Wicklungssystem der elektrischen Maschine 7, so führt dies unweigerlich zum vollständigen Ausfall des Leistungsantriebssystems 1. Die beiden parallel geschalteten vollständigen Antriebsmodule 2 bzw. die beiden parallel geschalteten Antriebsgrundmodule 5 wirken gemeinsam auf einen Standardmotor, die elektrische Maschine 7, der nur eine einzige dreiphasige Drehstromwicklung aufweist. Ein Fehler in einer Motorwicklung führt so zum Verlust des gesamten Leistungsantriebssystems 1.

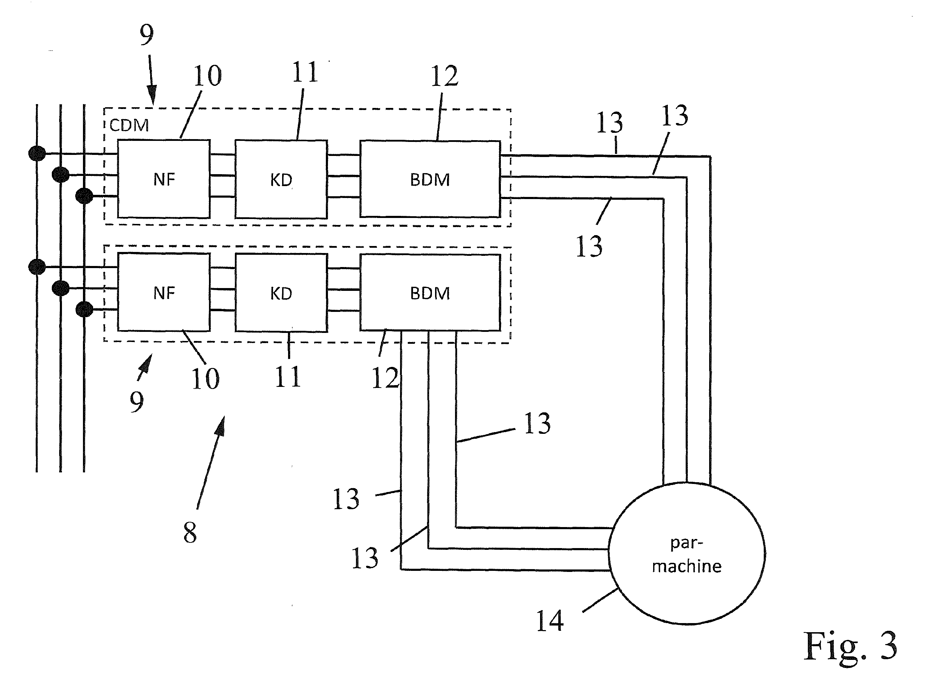

Anders ist die Situation beim erfindungsgemäßen Leistungsantriebssystem 8 gemäß der Fig. 3, das zwei dreiphasige Wicklungen aufweist. Wiederum sind zwei parallel geschaltete vollständige Antriebsmodule 9 vorgesehen, die allerdings jetzt im Unterschied zum Stand der Technik hintereinander geschaltet lediglich einen Netzfilter 10, eine Kommutierungsdrossel 11, sowie ein Antriebsgrundmodul 12 aufweisen. Eine Symmetrierungsdrossel ist nicht mehr erforderlich, so dass im Schaltschrank weniger Bauraum erforderlich ist und der Wirkungsgrad des Leistungsantriebssystems 8 im Vergleich zum Stand der Technik gesteigert werden kann, was wiederum zur Folge hat, dass weniger Wärme aus dem Schaltschrank abgeführt werden muss. Jedes der Antriebsgrundmodule 12 weist drei Ausgänge auf, die jeweils unabhängig voneinander über entsprechende Leitungen 13 in die anzutreibende Maschine, den Drehstrommotor 14, führen. Der Drehstrommotor 14 weist auf einem gemeinsamen Stator zwei im elektrischen Sinne voneinander unabhängige dreiphasige Wicklungen auf. Tritt nun bei einer Wicklung bzw. einem mehrphasigen Wicklungssystem ein Fehler oder Schaden auf, so führt dies nicht zum vollständigen Ausfall des Leistungsantriebssystems 8, sondern dieses kann weiterhin, wenn auch mit verringerter Leistung, betrieben werden. Dies führt zu einer deutlichen Steigerung der Maschinenverfügbarkeit.

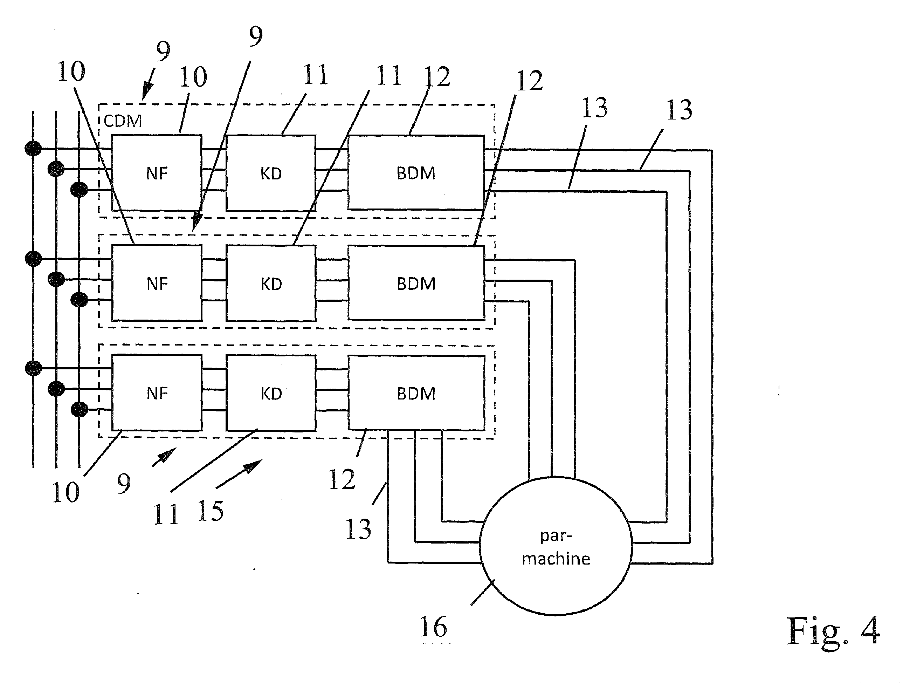

Ein weiteres erfindungsgemäßes Leistungsantriebssystem 15 ist in der Fig. 4 gezeigt. In der Fig. 4 sind Bauteile, die, zumindest im Wesentlichen, denen der Fig. 3 entsprechen, aus Gründen der Einfachheit mit gleichen Bezugsziffern wie in der Fig. 3 bezeichnet.

Im Unterschied zur Fig. 3 weist das Leistungsantriebssystem 15 der Fig. 4 drei zueinander parallel geschaltete vollständige Antriebsmodule 9 auf, die jeweils wieder aus dem Netzfilter 10, der Kommutierungsdrossel 11 und dem Antriebsgrundmodul 12 bestehen. Alle drei Antriebsgrundmodule 12 weisen drei Ausgänge auf, die alle direkt über Leitungen 13 mit der anzutreibenden Maschine, hier dem Drehstrommotor 16, verbunden sind. Der Drehstrommotor 16 weist einen hier nicht dargestellten Stator auf, der als gemeinsamer Stator drei voneinander unabhängige dreiphasige elektrische Wicklungssysteme hat.

Kommt es nun zu einem Fehler in einem der vollständigen Antriebsmodule 9 oder in einer Wicklung bzw. auch in zwei Wicklungen, so kann das System trotzdem noch weiter betrieben werden, um so mögliche Schäden, die beim Totalausfall des Leistungsantriebssystems 15 gegebenenfalls unvermeidbar wären, zuverlässig zu verhindern. Der elektrische Phasenversatz, den die einzelnen Drehstromwicklungen des Stators des Drehstrommotors 16, zu denen die Leitungen 13 führen, ohne weitere Maßnahmen aufweisen würden, ist insofern unerheblich, als dass die vollständigen Antriebsmodule 9 bzw. die Antriebsgrundmodule 12 den bauartbedingten Phasenversatz der Drehstromwicklungen im Rahmen der Regelung des Motorbetriebs berücksichtigen bzw. ausgleichen können und das Drehstromfeld so aufbauen, dass das Gesamtdrehfeld die Summe der einzelnen Drehstromfelder darstellt. Die Erfindung eignet sich insbesondere für Anwendungen bei Kunststoffmaschinen, beispielsweise bei Extrudern, bei Plastifizierschnecken oder auch für kritische Lüfter und Gebläse.

### Bezugszeichenliste

- 1: Leistungsantriebssystem
- 2: Antriebsmodul
- 3: Netzfilter
- 4: Kommutierungsdrossel
- 5: Antriebsgrundmodul
- 6: Symmetrierungsdrossel
- 7: elektrische Maschine
- 8: Leistungsantriebssystem
- 9: vollständiges Antriebsmodul
- 10: Netzfilter
- 11: Kommutierungsdrossel
- 12: Antriebsgrundmodul
- 13: Leitungen
- 14: Drehstrommotor
- 15: Leistungsantriebssystem
- 16: Drehstrommotor

## Patentansprüche

1. Leistungsantriebssystem (8, 15) mit einem Mehrphasenmotor, insbesondere mit einem Drehstrommotor (14, 16), und mit mehreren parallel geschalteten vollständigen Antriebsmodulen (9) und/oder Antriebsgrundmodulen (12) zum Antrieb des Mehrphasenmotors, **dadurch gekennzeichnet, dass** der Mehrphasenmotor, insbesondere der Drehstrommotor (14, 16), einen Stator mit mehreren elektrisch voneinander unabhängigen mehrphasigen, insbesondere dreiphasigen, Wicklungen aufweist.

2. Leistungsantriebssystem (8, 15) nach Anspruch 1, **dadurch gekennzeichnet, dass** der Mehrphasenmotor ein vier- oder höherpoliger, insbesondere mindestens zehnpoliger oder zwanzigpoliger oder vierzigpoliger, Mehrphasenmotor ist.

3. Leistungsantriebssystem (8, 15) nach einem der vorangehenden Ansprüche, **dadurch gekennzeichnet, dass** das Leistungsantriebssystem (8, 15) bei Ausfall einer oder mehrerer, aber nicht aller, der elektrisch voneinander unabhängigen mehrphasigen Wicklungen und/oder bei Ausfall eines oder mehrerer, aber nicht aller, vollständigen Antriebsmodule (9) und/oder Antriebsgrundmodule (12) zum Betrieb mit reduzierter Leistung ausgebildet ist.

4. Leistungsantriebssystem (8, 15) nach einem der vorangehenden Ansprüche, **dadurch gekennzeichnet, dass** die vollständigen Antriebsmodule (9) und/oder Antriebsgrundmodule (12), wenigstens teilweise, zur regelungstechnischen Berücksichtigung eines durch die Bauart des Mehrphasenmotors bedingten Phasenversatzes bei den mehrphasigen Wicklungen ausgebildet sind.

5. Leistungsantriebssystem (8, 15) nach einem der vorangehenden Ansprüche, **dadurch gekennzeichnet, dass** die vollständigen Antriebsmodule (9) und/oder Antriebsgrundmodule (12) zum Aufbau eines resultierenden Mehrphasenstromfeldes ausgebildet sind, das die Summe der einzelnen Mehrphasenstromfelder ist.

6. Leistungsantriebssystem (8, 15) nach einem der vorangehenden Ansprüche, **dadurch gekennzeichnet, dass** das Leistungsantriebssystem (8, 15) zum Antrieb einer Kunststoffmaschine und/oder eines Extruders und/oder einer Plastifizier- oder Extruderschnecke und/oder eines Lüfters und/oder Gebläses, insbesondere eines Gebläses für einen Hochofen, ausgebildet ist.

7. Leistungsantriebssystem (8, 15) nach einem der vorangehenden Ansprüche, **dadurch gekennzeichnet, dass** das Leistungsantriebssystem (8, 15) neben dem Mehrphasenmotor wenigstens einen Messfühler zur Aufnahme von Motordaten aufweist und/oder dass wenigstens ein vollständiges Antriebsmodul (9) im Rahmen einer Systemregelung und Systemablaufsteuerung neben einem Antriebsgrundmodul (12) eine Stromrichterbaugruppe und/oder eine Steuer- und Regeleinrichtung aufweist und/oder dass wenigstens ein vollständiges Antriebsmodul (9) eine Speisebaugruppe und/oder Hilfsausrüstungen und/oder weitere Ausrüstungen aufweist und/oder dass das Leistungsantriebssystem (8, 15) zum Antrieb von Ausrüstung einer Anlage oder eines Teils einer Anlage ausgebildet ist.

8. Leistungsantriebssystem (8, 15) nach einem der vorangehenden Ansprüche, **dadurch gekennzeichnet, dass** das Leistungsantriebssystem (8, 15) ohne Symmetrierdrossel am Ausgang des oder der Antriebsgrundmodule (12) realisiert ist und/oder dass wenigstens ein vollständiges Antriebsmodul (9) wenigstens einen Netzfilter (10) und/oder eine Kommutierungsdrossel (11) und/oder ein Antriebsgrundmodul (12) aufweist, insbesondere diese drei Bauteile in dieser Reihenfolge dem Mehrphasenmotor vorgeschaltet.

9. Leistungsantriebssystem (8, 15) nach einem der vorangehenden Ansprüche, **dadurch gekennzeichnet, dass** das Leistungsantriebssystem (8, 15) zwei oder drei parallel geschaltete vollständige Antriebsmodule (9) aufweist und/oder dass der Stator des Mehrphasenstrommotors zwei oder drei elektrisch voneinander unabhängige mehrphasige Wicklungen aufweist und/oder dass jede elektrisch unabhägige mehrphasige Wicklung mit einem anderen vollständigen Antriebsmodul (9) in Verbindung steht.

10. Verfahren zum Betrieb und/oder zur Steigerung der Betriebsverfügbarkeit eines Leistungsantriebssystems (8, 15) mit einem Mehrphasenmotor, insbesondere mit einem Drehstrommotor (14, 16), und mit mehreren parallel geschalteten vollständigen Antriebsmodulen (9) und/oder Antriebsgrundmodulen (12) zum Antrieb des Mehrphasenmotors, insbesondere Verfahren zur Steigerung der Betriebsverfügbarkeit eines Leistungsantriebssystems (8, 15) nach einem der vorangehenden Ansprüche, **dadurch gekennzeichnet, dass** der Mehrphasenmotor, insbesondere der Drehstrommotor (14, 16), mit einem Stator mit mehreren elektrisch voneinander unabhängigen mehrphasigen, insbesondere dreiphasigen, Wicklungen betrieben wird.

11. Verfahren nach Anspruch 10, **dadurch gekennzeichnet, dass** das Leistungsantriebssystem (8, 15) bei Ausfall einer oder mehrerer, aber nicht aller, der elektrisch voneinander unabhängigen mehrphasigen Wicklungen und/oder bei Ausfall eines oder mehrerer, aber nicht aller, vollständigen Antriebsmodule (9) und/oder Antriebsgrundmodule (12) mit reduzierter Leistung betrieben wird und/oder dass die vollständigen Antriebsmodule (9) und/oder Antriebsgrundmodule (12), wenigstens teilweise, einen durch die Bauart des Mehrphasenmotors bedingten Phasenversatz bei den mehrphasigen Wicklungen regelungstechnisch berücksichtigen.

12. Verfahren nach einem der Ansprüche 10 oder 11, **dadurch gekennzeichnet, dass** die vollständigen Antriebsmodule (9) und/oder Antriebsgrundmodule (12) ein resultierendes Mehrphasenstromfeld aus der Summe der einzelnen Mehrphasenstromfelder aufbauen und/oder dass das Leistungsantriebssystem (8, 15) eine Kunststoffmaschine und/oder einen Extruder und/oder eine Plastifizier- oder Extruderschnecke und/oder einen Lüfter und/oder ein Gebläse, insbesondere ein Gebläse für einen Hochofen, antreibt.

13. Verfahren nach einem der Ansprüche 10 bis 12, **dadurch gekennzeichnet, dass** ein Leistungsantriebssystem (8, 15) betrieben wird, das neben dem Mehrphasenmotor wenigstens einen Messfühler zur Aufnahme von Motordaten aufweist und/oder das wenigstens ein vollständiges Antriebsmodul (9) umfasst, das im Rahmen einer Systemregelung und Systemablaufsteuerung neben einem Antriebsgrundmodul (12) eine Stromrichterbaugruppe und/oder eine Steuer- und Regeleinrichtung aufweist, und/oder das wenigstens ein vollständiges Antriebsmodul (9) umfasst, das eine Speisebaugruppe und/oder Hilfsausrüstungen und/oder weitere Ausrüstungen aufweist, und/oder dass das Leistungsantriebssystem (8, 15) Ausrüstung einer Anlage oder eines Teils einer Anlage antreibt.

14. Verfahren nach einem der Ansprüche 10 bis 13, **dadurch gekennzeichnet, dass** das Leistungsantriebssystem (8, 15) ohne Symmetrierdrosseln am Ausgang des oder der Antriebsgrundmodule betrieben wird und/oder dass wenigstens ein vollständiges Antriebsmodul (9) des Leistungsantriebssystems (8, 15) mit wenigstens einem Netzfilter (10) und/oder einer Kommutierungsdrossel (11) und/oder einem Antriebsgrundmodul (12) betrieben wird, insbesondere mit diesen drei Bauteilen in dieser Reihenfolge dem Mehrphasenmotor vorgeschaltet.

15. Verfahren nach einem der Ansprüche 10 bis 14, **dadurch gekennzeichnet, dass** im Rahmen des Leistungsantriebssystems (8, 15) zwei oder drei vollständige Antriebsmodule (9) parallel geschaltet werden und/oder dass der Stator des Mehrphasenstrommotors mit zwei oder drei elektrisch voneinander unabhängigen mehrphasigen Wicklungen betrieben wird und/oder dass jede elektrisch unabhägige mehrphasige Wicklung mit einem anderen vollständigen Antriebsmodul (9) verbunden wird.
